# EUROPEAN PATENT SPECIFICATION

(11) **EP 3 427 337 B1**
(45) Date of publication and mention of the grant of the patent: **08.01.2020**
(21) Application number: 16710501.4
(22) Date of filing: 08.03.2016
(51) Int. Cl.: H01Q 3/24, H04B 7/06, H01Q 1/24, H04B 1/3827, H04W 52/36

(54) **EMF-LIMIT COMPLIANT TRANSMISSION WITH MULTIPLE ANTENNA ELEMENTS**
EMF-BEGRENZUNG KONFORME ÜBERTRAGUNG MIT MEHREREN ANTENNENELEMENTEN
ÉMISSION CONFORME AUX LIMITES EMF UTILISANT PLUSIEURS ÉLÉMENTS D'ANTENNE

(43) Date of publication of application: 16.01.2019
(73) Proprietor: Telefonaktiebolaget LM Ericsson (PUBL), 164 83 Stockholm (SE)
(72) Inventor: COLOMBI, Davide, SE-112 22 Stockholm (SE); TÖRNEVIK, Christer, SE-169 40 Solna (SE); BALDEMAIR, Robert, SE-17069Solna (SE); THORS, Björn, SE-187 62 Täby (SE)
(74) Representative: Zacco Sweden AB
(86) International application number: PCT/SE2016/050182
(87) International publication number: WO 2017/155433

(56) References cited:
- US-A1- 2007 046 539
- US-B1- 6 456 856

## Description

### Technical Field

This disclosure pertains to transmissions in a wireless communication network, in particular to transmissions utilizing multiple antenna elements.

### Background

For wireless communication networks, in particular for transmitting nodes for such networks, like e.g. user equipment or terminals, electromagnetic field (EMF) exposure limits, typically defined by government regulations, are applicable. Such limits may in particular be relevant for nodes used close to a human body, e.g. a user equipment like a smartphone. For such devices, the current EMF exposure limits above 6 GHz have been shown to be more restrictive in terms of the maximum possible transmission power than for frequencies below 6 GHz. In particular, the relative importance of EMF limits in comparison to other conditions limiting transmission power (e.g., interference conditions) may be considered to increase for such high frequencies.

US20070046539A1 discloses a method of controlling multiple antenna signal transmission. The method includes adjusting signal parameters so that transmission signals from a plurality of antennas combine to form a directional beam. A time duration in which the transmission signals are directed is controlled so that an average EIRP does not exceed a predetermined threshold.

US6456856B1 discloses a A radio communication apparatus includes a transceiver coupled to an antenna structure with many directional antennas that form a radiation pattern. The antenna structure gives greater importance to certain directions of transmission. A power regulation device is controlled by a control element for modifying the radiation pattern. The control element includes switches for selectively activating/deactivating the directional antennas to modify the radiation pattern. A proximity detection device measures at least one proximity parameter and feeds the control element with a proximity indication for controlling the power regulation device to reduce the radiation pattern in the direction of the radio communication apparatus user.

### Summary

The invention is defined by the independent claims. Preferred embodiments of the invention are stipulated in the dependent claims. While several embodiments and/or examples have been disclosed in this description, the subject-matter for which protection is sought is strictly and solely limited to those embodiments and/or examples encompassed by the scope of the appended claims. Embodiments and/or examples mentioned in the description that do not fall under the scope of the claims are useful for understanding the invention.

The invention is defined by the independent claims. Furthermore, embodiments of the invention are defined by the claims. It is an object of the present disclosure to provide approaches facilitating optimized transmission power considering EMF exposure limits (sometimes referred to as EMF limits in short) in particular for high frequencies, utilizing antenna arrangements with multiple antenna elements.

There is disclosed a transmitting node for a wireless communication network. The transmitting node is adapted for transmission utilizing independently controllable antenna elements of an antenna arrangement. The transmitting node is further adapted for switching between different beams or subsets of the antenna elements for transmission based on transmitted power in relation to at least one EMF exposure limit. Moreover, there is disclosed a method for operating a transmitting node for a wireless communication network. The transmitting node being adapted for transmission utilizing independently controllable antenna elements of an antenna arrangement. The method comprises switching between different beams or subsets of the antenna elements for transmission based on transmitted power in relation to at least one EMF exposure limit.

According to the approaches described herein, the power transmitted over a given time may be optimized, providing good signaling quality, in compliance with EMF exposure limits. Switching in particular facilitates the use of spatial and/or temporal spreading of transmissions to influence the average transmission power or energy per area, volume or solid angel, particular referring to a time interval of interest. The transmitting node will generally have to be operated to comply with all applicable EMF exposure limits and regulations.

Switching between different beams or subsets of antenna elements may comprise transmitting using beams or subsets which are different between switches. Switching may be performed in a time sequence, with time intervals (switching time intervals) between switches. The switching time intervals may for example be pre-defined and/or configured, and/or determined by the transmitting node. A switching time interval may determine a time interval in which a specific beam or subset of antenna elements is utilised for transmission. At the end of a switching time interval, it may be switched to another subset or beam, which may be used for transmission for an associated switching time interval. The switching time intervals may be different for different subsets, or may be equal (in duration or length of time). Switching may be performed according to a sequence, which may be configured and/or pre-determined. Switching may be periodical, such that there is switched between a limited number (e.g., N) of beams or subsets repeatedly and/or in a given order. Switching may be performed based on a configuration, which may be configured by a network or network node. Each subset may comprise a number of antenna elements of the antenna arrangement. Different subsets may comprise different antenna elements. In particular, it may be considered that different subsets differ in at least one physical antenna element. Switching may generally comprise transmitting in compliance with EMF exposure limits.

A beam may be produced by beamforming, which may comprise supplying different physical antenna elements with different signals to produce the beam. Different beams may in particular differ regarding their spatial pattern and/or solid angle of transmission. Transmission utilizing a subset of antenna elements may comprise beamforming. Generally, there may be defined a number N of beams. For different beams, different subsets of antenna elements may be used, or different signals may be supplied to the same physical antenna elements. Switching between different subsets may comprise switching between the N beams. Beams may be pre-defined and/or pre-configured, e.g. by a network node like an eNodeB or base station, e.g. via control signaling. It may be considered that the beams are defined by a codebook representing the different beams. The use of beamforming allows using spatial distribution of transmission patterns or corresponding beams to lower the average transmitted power per area or solid angle or volume, to comply with EMF limits.

Transmission may generally be performed at, or at about, 6 GHz, or a higher frequency. This frequency may be the frequency of carrier waves used for transmission. It may be considered that transmission is performed at a frequency range, which may be limited by a lower frequency and a higher frequency. A frequency of transmission may be representative of such a frequency range. A frequency range may correspond to a carrier and/or a bandwidth of a carrier.

The at least one EMF limit may generally comprise one or more (applicable) EMF exposure limits, in particular applicable to the transmitting node. Compliance with EMF exposure limit/s may be dependent on one or more parameters, in particular a maximum transmission power Pmax and/or a typical or relevant time interval T, e.g. an averaging time Tav. EMF exposure is typically intended to be averaged over an (averaging) time interval Tav to determine compliance. The EMF limit and/or corresponding parameters may be defined by regulation. The EMF limit may pertain to a frequency or frequency range, in particular a frequency or frequency range of transmission. There may be different EMF limits for different frequencies and/or frequency ranges. EMF exposure limits may refer to all EMF exposure limits applicable to the transmitting node, e.g. dependent on frequency/ies of transmission.

Compliance with the EMF exposure limit/s may generally be dependent on a maximum transmission power Pmax and/or an averaging time Tav.

Switching between different subsets of the antenna elements for transmission based on transmitted power in relation to at least one EMF exposure limit may comprise switching such that the a determined, e.g. averaged and/or maximum, transmitted power (in particular, for an area, solid angle or volume, and/or over a specified time interval, e.g. Tav or the typical or relevant time interval) is below a determined level that will ensure compliance with the EMF exposure limit.

There may be considered a wireless communication arrangement comprising a transmitting node as described herein and/or adapted to carry out any of the methods described herein.

Also, there may be considered a program product comprising instructions which may be carried out by control circuitry, the instructions, when carried out by the control circuitry, causing the control circuitry to control and/or perform any of the methods described herein.

There is also disclosed a storage medium arrangement storing any of the program products disclosed herein. A storage medium arrangement may generally comprise one or more storage media, e.g. memory devices, adapted to store instructions and/or a corresponding program product. The storage medium arrangement may be computer-readable and/or readable by control circuitry, and/or be connected and/or connectable to control circuitry or be implemented as part thereof. A storage medium may generally be a volatile or non-volatile storage medium, and/or comprise flash memory and/or read-only memory and/or optical memory and/or magnetic memory and/or random-access memory and/or buffer or cache memory, etc.

A transmitting node may generally be a terminal. A terminal may be a device adapted for wireless communication with a wireless communication network, in particular an access network, which may be connected to a core network. A terminal may be a user equipment and/or device for MTC (Machine-Type Communication), in particular a mobile phone, smartphone, handheld device, computer, laptop, Personal Digital Assistant, etc. An access network may comprise wireless communication nodes providing wireless communication and/or access to a transmitting node like a terminal. However, a transmitting node may alternatively be a wireless network node of a network, e.g. a base station. Generally, any device adapted for (wireless) transmission as disclosed herein may be considered a transmitting node. A transmitting node may be mobile or stationary.

An antenna arrangement may comprise a plurality of antenna elements, in particular 4 or more antenna elements (which may be referred to individually as antennas in some cases). The antenna elements may be independently controllable, An independently controllable antenna element may be an antenna element that may be supplied with a signal for transmission differing (in a controllable and/or variable manner) from signal/s for transmission supplied to one or more other antenna elements, in particular pertaining to timing and/or phase and/or power and/or polarisation. An antenna element may be a physical antenna element, e.g. a dipole element, or a virtual element. A virtual element may comprise a mapping to and/or representation of one or more physical antenna elements. A subset of antenna elements may comprise one or more antenna elements of the antenna arrangement. Different subsets may differ in at least one antenna element. Switching between subsets may comprise supplying different subsets with signals for transmission. Alternatively or additionally, different subsets of antenna elements may represent different beams transmitted using beamforming- However, it should be noted that different beams may be produced using the same subset of antenna elements by providing different signals to the antenna elements.

### Brief description of the drawings

The drawings are provided to illustrate and elucidate the approaches described herein, and are not intended to limit the scope to the disclosure.

The drawings comprise:
Figure 1, showing a flowchart of a an exemplary method for operating a transmitting node;
Figure 2, showing an exemplary transmitting node;
Figure 3, showing a flowchart of an exemplary method for operating a transmitting node; and
Figure 4, showing another exemplary transmitting node.

### Detailed description

This disclosure pertains in particular to the possibility for a wireless communication device like a transmitting node to manage the spatial and time distribution of radio signal emission in order to decrease the minimum distance for compliance with electromagnetic field (EMF) exposure limits in particular for radio frequencies (RF). The approaches disclosed are suitable, but not limited to, future wireless communication devices (5G) operating in high frequency bands (e.g., 6 GHz or higher).

It is expected that the future communication spectrum used e.g. for 5G technology will be extended to include frequency bands above 6 GHz. At these frequencies, the wavelength is relatively small, such that smaller antenna elements may be used, opening up the possibility for integration of more antennas or antenna elements (or antenna arrays or arrangements) even on devices (transmitting nodes) with small form factors, e.g. terminals.

At frequencies above 6 GHz the current EMF exposure limits have been shown to be more restrictive in terms of the maximum possible transmitted power from a device used in close proximity of the human body. Technical solutions are therefore needed to be able to maintain the necessary transmission power levels to ensure the required QoS and guarantee compliance with the EMF limits.

EMF exposure limits are often intended to be averaged over time. The averaging time (Tav), although different for different exposure standards and frequency dependent, is in the order of minutes. Exposure can be reduced by limiting the time to which a given area of a body is exposed to less than Tav. This can be achieved by switching between subsets as described herein, e,g. making use of subsets of antenna elements in the device, e.g. to provide beam-forming, so that each of the beams exposes one of N sufficiently separated tissue regions for the exposed area to be considered independently. Switching between different subsets may be performed accordingly. By transmitting with a certain beam only for a limited amount of time, e.g. a switching time, which may be (Tav/N), the time-average exposure level will be reduced. When the time allocated is over, transmission may be carried on by a different beam, and so on, e.g. with the same switching time or a different switching time. This facilitates exposure reduction and/or an increased total transmitted power.

An alternative approach is to make use of N (separated) antennas or (physical) antenna elements (or subsets of antenna elements), so that each (physical) antenna element or antenna exposes separate tissue regions. By transmitting with a certain antenna or antenna element (or a subset) only for a limited amount of switching time, e.g. (Tav/N), the time-average exposure level will be reduced. Switching may be performed accordingly. It should be noted that a (single) antenna element (which may be a physical antenna element) represents a subset of antenna elements (of one element), and that different physical antenna elements generally will be located a different physical locations.

By means of the described solution, future mobile communication networks (5G and beyond) operating at frequencies above 6 GHz, could make use of uplink power levels similar to those employed by current technologies (2G, 3G, 4G), in spite of more restrictive EMF exposure limits. This in turn will allow for larger coverage and capacity.

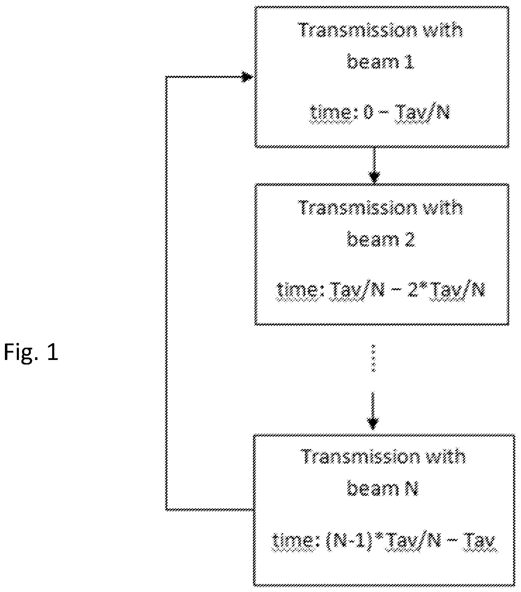

There may be considered a wireless device (like a transmitting node) capable of providing beam-forming, for instance by means of an antenna array, respectively by utilizing subsets of antenna elements of the antenna array (the terms antenna array and antenna arrangement may be considered to be synonymous). Referring to figure 1, the transmitting node may be adapted to transmit N (different) beams with a suitable QoS (Quality of Service), for which the resulting localized exposure may be considered spatially separated. Transmission for a beam may occur with a specific spatial angle (solid angle) for a slot of time T (switching time), after which a second spatial angle is allowed to be transmitted into, and so on. T may be equal to Tav/N, wherein Tav is the averaging time relevant for EMF exposure. After a time Tav, transmission may re-start cyclically from the first spatial angle. The maximum allowed power transmitted with each beam is Pmax*N, where Pmax would be the power to meet compliance with the exposure limits if transmission was carried by the same beam continuously. In figure 1, there are indicated time ranges, e.g. from time 0 to Tav/N, not time differences.

If different- but very similar - beams are used and expose the same tissue area these beams can be collected into beam groups and above paragraph may apply for the beam groups rather than beams. Each beam represents a subset of antenna elements, which may comprise at least 2 (physical) antenna elements used for beamforming. A beam group may represent and/or utilise a subset of antenna elements as well, with a number of antenna elements (physical elements), which may be dependent on the number of beams in the group.

As an alternative solution the device is equipped with N antennas (representing different physical antenna elements) placed and designed so that the localized exposure for each antenna can be considered spatially separated. Similarly to what described above, each antenna transmits for a slot of time T, after which a second antenna is allowed to transmit and so on. The maximum allowed power transmitted by each antenna is Pmax*N, where Pmax would be the power to meet compliance with the exposure limits if the antenna could transmit continuously (here, for simplicity, assumed equal for each antenna). However, any transmission power allowing compliance with the EMF limit may be considered as transmission power or maximum transmission power. In particular, there may be different transmission powers for different beams and/or subsets, in particular with different switching times for different beams or subsets.

A mix of both approaches can be applied by using more than one antenna array (N may be the total number of beams with spatially separated exposure).

The method is applicable also when the localized exposure from each antenna/beam is not isolated from the others, the allowed transmitted power could then be lower than Pmax*N.

N does not necessarily correspond to the overall number of available beams. A subset of the available beams can be selected and used for transmission, chosen for instance to optimize the communication performance (i.e. N does not necessarily correspond a fixed number and may vary with time).

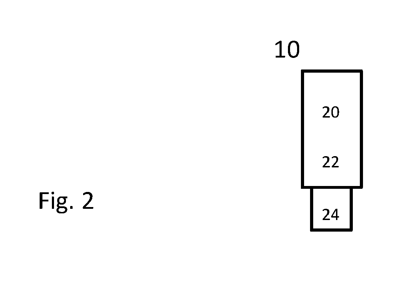

Figure 2 schematically shows a transmitting node 10, which may be implemented as a terminal or a user equipment. Transmitting node 10 comprises control circuitry 20, which may comprise a controller connected to a memory. A receiving module and/or transmitting module and/or control or processing module or any other module of the transmitting node 10 may be implemented in, and/or executable by, the control circuitry 20, in particular as module in the controller. Transmitting node 10 also comprises radio circuitry 22 providing receiving and transmitting or transceiving functionality, the radio circuitry 22 connected or connectable to the control circuitry. An antenna circuitry 24 of the terminal 10 is connected or connectable to the radio circuitry 22 to collect or send and/or amplify signals. The antenna circuitry represent an antenna arrangement with a plurality of independently controllable antenna elements (e.g., controllable by the radio circuitry 22 and/or control circuitry 20). Radio circuitry 22 and the control circuitry 20 controlling it are configured for communicating with a wireless communication network, in particular at a high frequency (>= 6 GHz). The transmitting node 10 may be adapted to carry out any of the methods for operating a transmitting node disclosed herein; in particular, it may comprise corresponding circuitry, e.g. control circuitry. Modules of a transmitting node as described herein may be implemented in software and/or hardware and/or firmware in corresponding circuitry.

Configuring a transmitting node may comprise receiving, by the configured node, configuration data indicating a setting or set-up or configuration the configured node is to take up, and/or bringing the configured node into the configuration or setting or set-up. Such configuring may be performed by a network node (e.g., base station or eNodeB), e.g. by control signaling indicating the configuration and/or the configuration data. A transmitting node may be adapted for, and/or comprise a configuration module for, being configured, and/or perform such configuring, in particular based on configuration data received, e.g. from a network or network node. A network node may be adapted for, and/or comprise a configuring module for, performing such configuring, and/or may perform such configuring, e.g. by transmitting corresponding configuration data. Pre-defined information and/or data may be stored in a memory device accessible to a transmitting node and/or respective control circuitry.

A transmitting node may generally comprise circuitry, e.g. control circuitry and/or radio circuitry and/or antenna circuity, which may implement an air interface, in particular a millimeter-wave air interface. Control circuitry may generally comprise processing circuitry, e.g. one or more processors and/or controllers, e.g. microcontroller/s. It may be considered that control circuitry may comprise, and/or is connected or connectable to, memory circuitry, e.g. one or more memory devices. A memory device may comprise volatile and/or non-volatile memory, e.g. random access memory and/or read-only memory and/or flash memory and/or optical memory and/or magnetic memory, or generally any kind of memory readable by control circuitry and/or corresponding processing circuitry. Radio circuitry may generally comprise circuitry for transmitting and/or receiving wireless signals, e.g. one or more transceivers and/or receivers and/or transceivers. The radio circuitry may comprise detectors and/or amplifiers and/or samplers and/or filter/s and/or generally suitable circuitry or interfaces for handling signaling. Antenna circuitry may generally comprise one or more antenna elements and/or corresponding devices (e.g., pre-amplifiers and/or interfaces to radio circuitry). Control circuitry may generally be adapted and/or connected and/or connectable for controlling radio circuitry and/or antenna circuitry. Radio circuitry may be operably connected or connectable to antenna circuitry.

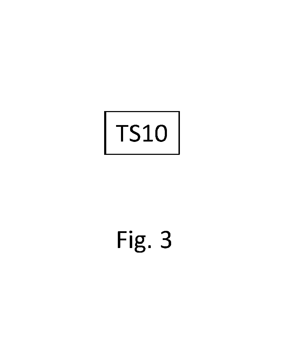

Figure 3 shows a flowchart of an exemplary method for operating a transmitting node, which may be any of the transmitting nodes described herein. The method may comprise an action TS10 of switching between different subsets of the antenna elements of an antenna arrangement for transmission based on transmitted power in relation to at least one EMF exposure limit.

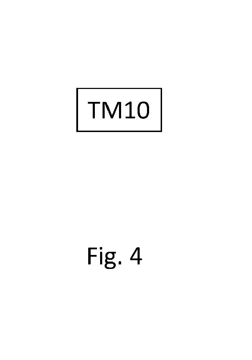

Figure 4 shows an exemplary transmitting node, which may have any of the features of a transmitting node described herein. The transmitting node comprises a switching module TM10 for performing action TS10.

It is clear for a person skilled in the art that the examples described herein are not intended to limit the scope of the approaches described, but are provided for explaining these approaches.

## Claims

1. A transmitting node (10) for a wireless communication network, the transmitting node (10) being adapted for transmission utilizing independently controllable antenna elements of an antenna arrangement (24), the transmitting node (10) being adapted for switching between different beams or subsets of the antenna elements for transmission based on transmitted power in relation to at least one EMF exposure limit, wherein the transmitting node (10) is configured to transmit with a specific beam or subset of antenna elements for a limited amount of switching time and the transmission is carried on by a different beam or subset of antenna elements when the switching time is over, and wherein the switching time is equal to Tav/N, where Tav is the averaging time relevant for EMF exposure and N is a number of beams transmitted by the transmitting node (10) with a suitable Quality of Service, QoS.

2. The transmitting node (10) according to claim 1, wherein transmission utilizing a subset of antenna elements comprises beamforming.

3. The transmitting node (10) according to one of the preceding claims, wherein transmission is performed at about 6GHz or a higher frequency.

4. The transmitting node (10) according to one of the preceding claims, wherein compliance with the EMF exposure limit is dependent on a maximum transmission power Pmax and the averaging time, Tav.

5. A method for operating a transmitting node (10) for a wireless communication network, the transmitting node (10) being adapted for transmission utilizing independently controllable antenna elements of an antenna arrangement (24), the method comprising switching between different beams or subsets of the antenna elements for transmission based on transmitted power in relation to at least one EMF exposure limit, wherein the transmission is carried on by a specific beam or subset of antenna elements for a limited amount of switching time and the transmission is carried on by a different beam or subset of antenna elements when the switching time is over, and wherein the switching time is equal to Tav/N, where Tav is the averaging time relevant for EMF exposure and N is a number of beams transmitted by the transmitting node (10) with a suitable Quality of Service, QoS.

6. The method according to claim 5, wherein herein transmission utilizing a subset of antenna elements comprises beamforming.

7. The method according to one of claims 5 to 6, wherein transmission is performed at about 6GHz or a higher frequency.

8. The method according to one of claims 5 to 7, wherein compliance with the EMF exposure limit is dependent on a maximum transmission power, Pmax, and the averaging time, Tav.

9. A wireless communication arrangement comprising the transmitting node (10) according to one of claims 1 to 4 or adapted to carry out the method of one of claims 5 to 8.

10. A program product comprising instructions, which may be carried out by control circuitry, the instructions, when carried out by the control circuitry, causing the control circuitry to control or perform the method of one of claims 5 to 8.

11. A storage medium arrangement storing the program product according to claim 10.

## Patentansprüche

1. Übertragungsknoten (10) für ein drahtloses Kommunikationsnetz, wobei der Übertragungsknoten (10) ausgelegt ist zur Übertragung unter Verwendung von unabhängig steuerbaren Antennenelementen einer Antennenanordnung (24), wobei der Übertragungsknoten (10) zur Übertragung auf der Grundlage der übertragenen Leistung im Verhältnis zu mindestens einem Elektromagnetfeld-Expositionsgrenzwert zum Umschalten zwischen verschiedenen Strahlen oder Teilmengen der Antennenelemente ausgelegt ist, wobei der Übertragungsknoten (10) eingerichtet ist, um mit einem bestimmten Strahl oder einer Teilmenge von Antennenelementen während einer begrenzten Schaltzeit zu übertragen, und die Übertragung durch einen anderen Strahl oder eine andere Teilmenge von Antennenelementen fortgesetzt wird, wenn die Schaltzeit abgelaufen ist, und wobei die Schaltzeit gleich Tav/N ist, wobei Tav die für den Elektromagnetfeld-Expositionsgrenzwert relevante Mittelungszeit ist und N die Anzahl von Strahlen ist, die durch den Übertragungsknoten (10) mit einer geeigneten Dienstgüte (Quality of Service, QoS) übertragen werden.

2. Übertragungsknoten (10) nach Anspruch 1, wobei die Übertragung unter Nutzung einer Teilmenge von Antennenelementen eine Strahlformung umfasst.

3. Übertragungsknoten (10) nach einem der vorhergehenden Ansprüche, wobei die Übertragung bei ca. 6 GHz oder einer höheren Frequenz durchgeführt wird.

4. Übertragungsknoten (10) nach einem der vorhergehenden Ansprüche, wobei die Einhaltung des Elektromagnetfeld-Expositionsgrenzwerts von einer maximalen Übertragungsleistung Pmax und der Mittelungszeit, Tav, abhängt.

5. Verfahren zum Betreiben eines Übertragungsknotens (10) für ein drahtloses Kommunikationsnetz, wobei der Übertragungsknoten (10) ausgelegt ist zur Übertragung unter Verwendung von unabhängig steuerbaren Antennenelementen einer Antennenanordnung (24), wobei das Verfahren zwecks Übertragung auf der Grundlage der Übertragungsleistung im Verhältnis zu mindestens einem Elektromagnetfeld-Expositionsgrenzwert ein Umschalten zwischen verschiedenen Strahlen oder Teilmengen der Antennenelemente umfasst, wobei die Übertragung durch einen bestimmten Strahl oder eine Teilmenge von Antennenelementen während einer begrenzten Schaltzeit fortgesetzt wird und die Übertragung durch einen anderen Strahl oder eine andere Teilmenge von Antennenelementen fortgesetzt wird, wenn die Schaltzeit abgelaufen ist, und wobei die Schaltzeit gleich Tav/N ist, wobei Tav die für den Elektromagnetfeld-Expositionsgrenzwert relevante Mittelungszeit ist und N die Anzahl von Strahlen ist, die durch den Übertragungsknoten (10) mit einer geeigneten Dienstgüte (QoS) übertragen werden.

6. Verfahren nach Anspruch 5, wobei hierin die Übertragung unter Nutzung einer Teilmenge von Antennenelementen eine Strahlformung umfasst.

7. Verfahren nach einem der Ansprüche 5 bis 6, wobei die Übertragung bei ca. 6 GHz oder einer höheren Frequenz durchgeführt wird.

8. Verfahren nach einem der Ansprüche 5 bis 7, wobei die Einhaltung des Elektromagnetfeld-Expositionsgrenzwerts von einer maximalen Übertragungsleistung, Pmax, und der Mittelungszeit, Tav, abhängt.

9. Drahtlose Kommunikationsanordnung, die den Übertragungsknoten (10) nach einem der Ansprüche 1 bis 4 umfasst oder ausgelegt ist, um das Verfahren nach einem der Ansprüche 5 bis 8 auszuführen.

10. Programmprodukt, das Anweisungen umfasst, die durch eine Steuerschaltung ausgeführt werden können, wobei die Anweisungen bei Ausführung durch die Steuerschaltung bewirken, dass die Steuerschaltung das Verfahren nach einem der Ansprüche 5 bis 8 durchführt.

11. Speichermedium zum Speichern des Programmprodukts nach Anspruch 10.

## Revendications

1. Nœud de transmission (10) pour un réseau de communication sans fil, le nœud de transmission (10) étant conçu pour une transmission utilisant des éléments d'antenne pouvant être commandés indépendamment d'un agencement d'antenne (24), le nœud de transmission (10) étant conçu pour une commutation entre différents faisceaux ou sous-ensembles des éléments d'antenne pour une transmission sur la base de la puissance transmise par rapport à au moins une limite d'exposition aux CEM, dans lequel le nœud de transmission (10) est configuré pour transmettre avec un faisceau ou sous-ensemble d'éléments d'antenne spécifique pendant une quantité limitée de temps de commutation et la transmission est transportée par un faisceau ou sous-ensemble d'éléments d'antenne différent lorsque le temps de commutation est passé, et dans lequel le temps de commutation est égal à Tav/N, où Tav est le temps de moyennage pertinent pour une exposition aux CEM et N est un nombre de faisceaux transmis par le nœud de transmission (10) avec une qualité de service, QoS, appropriée.

2. Nœud de transmission (10) selon la revendication 1, dans lequel une transmission utilisant un sous-ensemble d'éléments d'antenne comprend une formation de faisceau.

3. Nœud de transmission (10) selon l'une des revendications précédentes, dans lequel une transmission est mise en œuvre à environ 6 GHz ou une plus haute fréquence.

4. Nœud de transmission (10) selon l'une des revendications précédentes, dans lequel une conformité avec la limite d'exposition aux CEM dépend d'une puissance de transmission maximale Pmax et du temps de moyennage, Tav.

5. Procédé d'exploitation d'un nœud de transmission (10) pour un réseau de communication sans fil, le nœud de transmission (10) étant conçu pour une transmission utilisant des éléments d'antenne pouvant être commandés indépendamment d'un agencement d'antenne (24), le procédé comprenant une commutation entre différents faisceaux ou sous-ensembles des éléments d'antenne pour une transmission sur la base de la puissance transmise par rapport à au moins une limite d'exposition aux CEM, dans lequel la transmission est transportée par un faisceau ou sous-ensemble d'éléments d'antenne spécifique pendant une quantité limitée de temps de commutation et la transmission est transportée par un faisceau ou sous-ensemble d'éléments d'antenne différent lorsque le temps de commutation est passé, et dans lequel le temps de commutation est égal à Tav/N, où Tav est le temps de moyennage pertinent pour une exposition aux CEM et N est un nombre de faisceaux transmis par le nœud de transmission (10) avec une qualité de service, QoS, appropriée.

6. Procédé selon la revendication 5, dans lequel ici une transmission utilisant un sous-ensemble d'éléments d'antenne comprend une formation de faisceau.

7. Procédé selon l'une quelconque des revendications 5 à 6, dans lequel une transmission est mise en œuvre à environ 6 GHz ou une plus haute fréquence.

8. Procédé selon l'une quelconque des revendications 5 à 7, dans lequel une conformité avec la limite d'exposition aux CEM dépend d'une puissance de transmission maximale, Pmax, et du temps de moyennage, Tav.

9. Agencement de communication sans fil comprenant le nœud de transmission (10) selon l'une quelconque des revendications 1 à 4 ou conçu pour effectuer le procédé selon l'une des revendications 5 à 8.

10. Produit programme comprenant des instructions, qui peuvent être effectuées par un circuit de commande, les instructions, lorsqu'elles sont effectuées par le circuit de commande, amenant le circuit de commande à commander ou mettre en œuvre le procédé selon l'une des revendications 5 à 8.

11. Agencement de support de stockage stockant le produit programme selon la revendication 10.
